# EUROPEAN PATENT SPECIFICATION

(11) **EP 2 143 591 B1**
(45) Date of publication and mention of the grant of the patent: **24.04.2013**
(21) Application number: 09164997.0
(22) Date of filing: 09.07.2009
(51) Int. Cl.: B60R 19/56, B60R 19/38, B60P 1/28, B60P 1/04

(54) **Rear bumper for a truck with a tipper body**
Hintere Stoßstange für einen LKW mit Kipperaufbau
Pare-choc arrière pour camion doté d'une benne

(30) Priority: 11.07.2008 EP 08160272
(43) Date of publication of application: 13.01.2010
(73) Proprietor: Hyva International B.V., 2400 AH Alphen aan de Rijn (NL)
(72) Inventor: Wassenaar, Hendrik, 2401 DM Alphen a/d Rijn (NL)
(74) Representative: Uittenbogaart, Gustaaf Adolf

(56) References cited:
- WO-A-03/055723
- DE-U1- 8 711 818
- US-A- 2 799 531
- US-A- 4 026 590
- US-A- 4 403 674
- US-A- 4 410 207
- US-A- 4 514 002
- US-A- 4 988 258

## Description

The invention concerns a truck in according to the preamble of claim 1. Document US 4026590 discloses such a truck. The bumpers disclosed in this document are attached to the tipper body at the rear of the tilt shaft. Moving the bumper against the tipper body prior to tilting requires a complicated construction to ensure that the bumper can move between a position more or less against the overhang of tipper body and a position below the rear of the overhang of the tipper body. In the rough environment where these trucks are used, such a complicated construction is vulnerable and this leads to malfunction. In order to overcome this disadvantage the truck is according to claim 1. In this way the bumper rotates around a strong and stable hinge that is combined with the tilt shaft so that collisions against the bumper only lead to limited deformations. Also the bumper can be located under the rear end of the overhang when the truck is driving and moved against the underside of the overhang when the truck is unloaded by tilting the tipper body. In this way the bumper does not conflict with the load during unloading the tipper body.

In accordance with an embodiment the truck is according to claim 2. In this way a simple construction makes it possible to adapt the bumper frame for use during driving or during tilting the tipper body.

In accordance with an embodiment the truck is according to claim 3. In this way the bumper is positioned in a quick way immediately before starting unloading.

The invention also concerns a method according to claim 4. In this way the bumper prevents upcoming vehicles to come partly under the rearward end of the tipping body while unloading is easy without the risk that the bumper damages the tipper body or that the bumper interferes with the load.

Hereafter the invention is explained by describing an embodiment with the aid of a drawing. In the drawing
Figure 1 shows in side view a truck for transporting bulk load in a tipper body,
Figure 2 shows the truck of figure 1 with the tipper body in tilted position,
Figure 3 shows a perspective schematic view of the bumper of the truck of figure 1,
Figure 4 shows a perspective schematic view of the bumper of figure 3
Figure 5 shows in side view the bumper and the tipper body ready for driving,
Figure 6 shows in side view the bumper in stored position and the tipper body ready for tilting, and
Figure 7 shows in side view with the tipper body in tilted position.

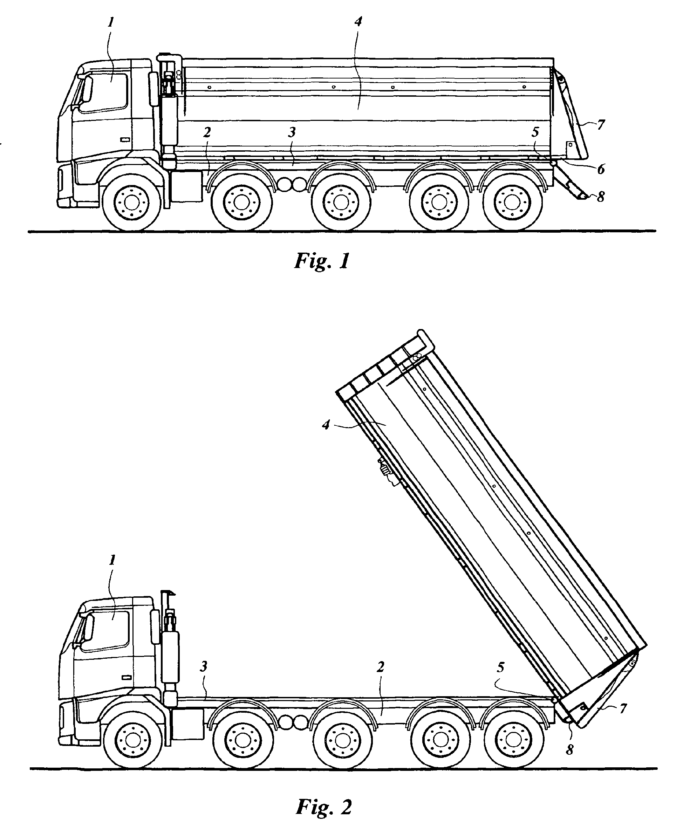

Figure 1 shows a truck with a chassis 2 and a cabin 1. The chassis 2 supports a sub frame 3. The subframe 3 supports a tipper body 4, a hinge 5 couples the tipper body 4 to the sub frame 3. At the back of the truck, a board 7 closes the tipper body 4. The tipper body 4 has an overhang 6 at the back of the hinge 5 so that it extends a distance backwards from the chassis 2. As figure 2 shows when tilting the overhang 6 lets the end of the tipper body 4 and the bottom of the board 7 lower towards the road so that emptying of the tipper body 4 is more controlled. This is an advantage when the load in the tipper body must be unloaded in a machine near the road such as during asphalting the road. In the shown embodiment, there is a sub frame 3 on the chassis 2, in other embodiment the tipper body 4 is coupled to the chassis 2 directly.

A bumper 8 extends behind the chassis 2 at a low level under the overhang 6 and for instance approximately 0,5 m above the road so that during driving the bumper 8 protects traffic approaching the truck from behind against colliding with the overhang 6. In its lower position, it is not possible to tip load into an asphalt machine due to the construction of these machines or to tip at other locations which have limited access. Therefore, before tilting the tipper body 4 the bumper 8 retracts upwards against the underside of the overhang 6 of the tipper body 4.

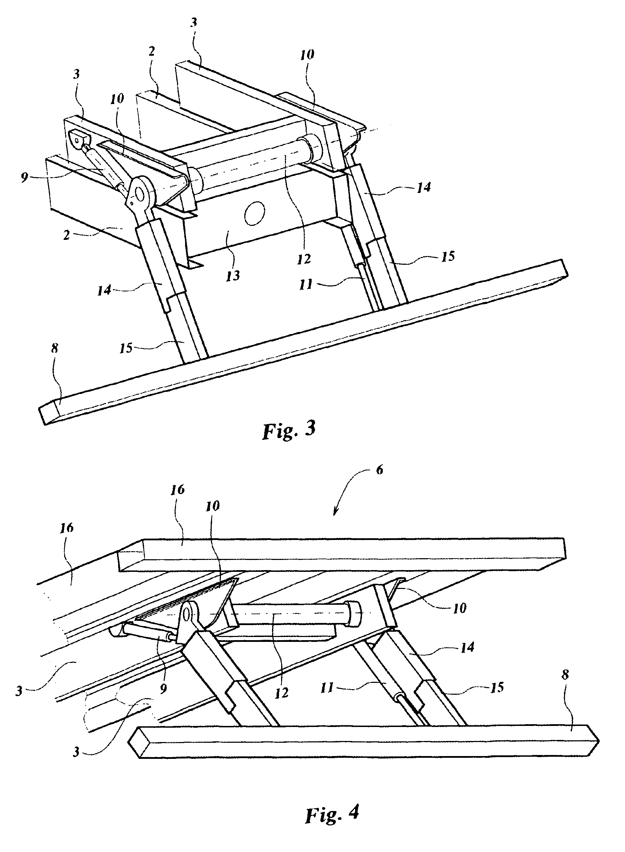

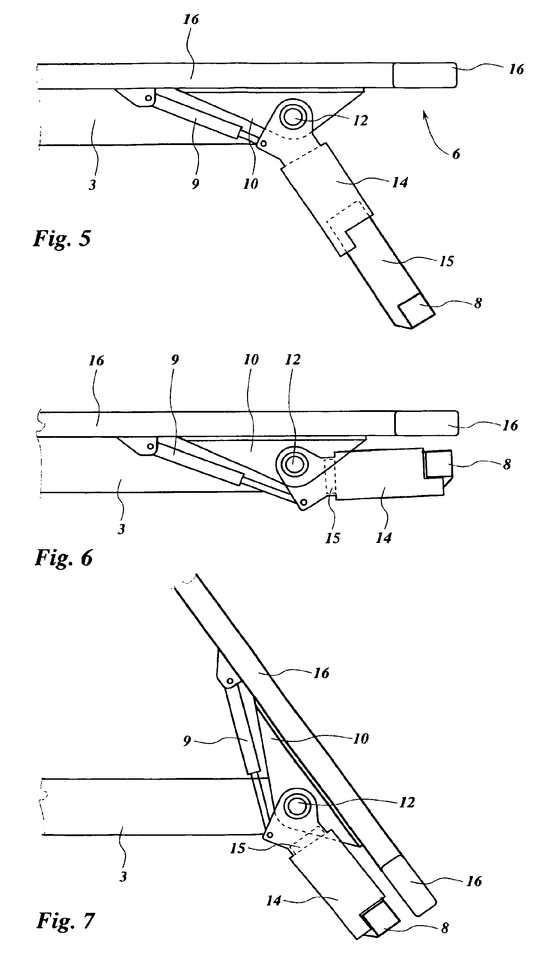

Figure 3 and 4 show the construction of the bumper 8 and figures 5, 6 and 7 show how the bumper 8 retracts against the underside of the tipper body 4. The bumper 8 has two support plates 15 and each support plate 15 can slide in a support tube 14 when actuated by a cylinder 11. The support tubes 14 can rotate around a rotation axis 12 relative to coupling plates 10 when actuated by a cylinder 9. The coupling plates 10 couple the support tube 14 to a tipper body 16 that is part of the tipper body 4. In the shown embodiment, the rotation axis 12 of the tipper body 16 is the same as the rotation axis of hinge 5 so that during tilting of the tipper body 4 the position of bumper 8 does not change relative to the tipper body 4.

The support plates 15 and support tubes 14 are more or less in line with the chassis beams and/or tilt frame beams so that the support construction of the bumper 8 does not obscure lights or markings located at the back of the truck and so that forces on the bumper 8 are guided directly into the chassis 2.

As can be seen in figure 5 in its active position, that is during driving of the truck, the bumper 8 is more or less perpendicular under the most aft part of the tipper body 16 so that upcoming traffic would collide simultaneously against the bumper 8 and the tipper body 16. The forces of a collision against the bumper 8 can be considerable and the construction of the bumper 8 must be able to withstand these forces when the bumper 8 is in the position as shown in figure 5. If required additional stationary supports on the coupling plates 10 for limiting the forward rotation of the support tube 14.

As shown in figure 6, preparation of tilting the tipper body 16 the cylinder 11 retracts the support plates 15 into the support tube 14 and cylinder 9 rotates the support tubes 14 upwards so that the bumper 8 is more less in the plane of the sub frame 3 and against the tilt frame 16. Figure 7 shows the tipper body 16 in tilted position, the bumper 8 is against the tipper body 16 and there is no interference of the bumper 8 with other parts of the truck.

## Claims

1. Truck for transporting bulk loads comprising a chassis (2), a tipper body (4,16) supported by the chassis and at the end of the tipper body a tilt shaft (5) to connect the tipper body to the chassis wherein the tipper body extends with an overhang (6) rearwards of the tilt shaft and a bumper (8) at the rear of the chassis under the tipper body wherein the bumper (8) comprises a bumper frame (14,15) and a hinge (12) connecting the bumper frame to the tipper body **characterized in that** the tilt shaft (5) and the hinge (12) have the same rotation axis and the bumper (8) has an adjustment means for extending and shortening the distance between the bumper and the hinge.

2. Truck in accordance with claim 1 wherein the adjustment means comprises a slide.

3. Truck in accordance with one of the previous claims comprising a first actuator (9) coupled to the tipper body (4,16) and the bumper frame (14) for moving the bumper frame in an upper position and a lower position and a second actuator (11) coupled to the bumper (8) and the bumper frame for adjusting the distance between the bumper and the hinge (12).

4. Method for transporting a bulk load using a vehicle with a tipper body (4) and unloading the bulk load from the tipper body by rotating the tipper body around a tilt shaft (5) **characterized in that** during transport a first and a second actuator (9, 11) position a bumper (8) that is coupled to the tipper body (4) by a hinge (12), that has the same rotation axis as the tilt shaft, under a rearward end of the tipper body and more or less 400 - 600 mm above the road and wherein before unloading by tilting the tipper body the first actuator (9) rotates the bumper (8) upwards against the underside of the tipper body so that it can tilt with the tipper body and the second actuator (11) moves the bumper (8) forwards so that the bumper is completely under the tipper body (4).

## Patentansprüche

1. LKW zum Transportieren von Massenladungen, aufweisend ein Chassi (2), einen Kipperaufbau (4, 16), der auf dem Chassi gelagert ist und an dem Ende von dem Kipperaufbau einen Schwenkschaft (5) hat, um den Kipperaufbau mit dem Chassi zu verbinden, wobei sich der Kipperaufbau mit einem Überstand (6) rückwärtig von dem Schwenkschaft erstreckt und eine Stoßstange (8) an der Hinterseite des Chassi unter dem Kipperaufbau, wobei die Stoßstange (8) einen Stoßstangenrahmen (14, 15) und ein Scharnier (12) aufweist, um den Stoßstangenrahmen mit dem Kipperaufbau zu verbinden, **dadurch gekennzeichnet, dass** der Schwenkschaft (5) und das Scharnier (12) die gleiche Rotationsachse aufweisen und die Stoßstange (8) ein Einstellmittel zum Verlängern und Verkürzen der Distanz zwischen der Stoßstange und dem Scharnier aufweist.

2. LKW gemäß Anspruch 1, wobei das Einstellmittel eine Gleitbahn aufweist.

3. LKW gemäß einem der vorhergehenden Ansprüche, aufweisend einen ersten Aktuator (9), der zum Bewegen des Stoßstangenrahmens in eine obere und eine niedrigere Position, mit dem Kipperaufbau (4, 16) und dem Stoßstangenrahmen (14) gekoppelt ist und einen zweiten Aktuator (11), der zum Einstellen der Distanz zwischen der Stoßstange und dem Scharnier (12) mit der Stoßstange (8) und dem Stoßstangenrahmen gekoppelt ist.

4. Verfahren zum Transportieren einer Massenladung unter Verwendung von einem Fahrzeug mit einem Kipperaufbau (4) und dem Abladen der Massenladung von dem Kipperaufbau durch Verschwenken des Kipperaufbaus um einen Schwenkschaft (5), **dadurch gekennzeichnet, dass** ein erster und zweiter Aktuator (9, 11) während des Transports eine Stoßstange (8), die mit dem Kipperaufbau (4) gekoppelt ist, durch ein Scharnier (12), das die gleiche Rotationsachse wie der Schwenkschaft hat, unter ein rückwärtiges Ende des Kipperaufbaus und mehr oder weniger als 400 - 600 mm über der Straße positioniert und wobei vor dem Entladen der erste Aktuator (9) durch Verschwenken des Kipperaufbaus um die Stoßstange (8) nach oben gegen die Unterseite des Kipperaufbaus verschwenkt, so dass die Stoßstange (8) mit dem Kipperaufbau verschwenken kann und der zweite Aktuator (11) die Stoßstange (8) in vorwärts Richtung bewegt, so dass sich die Stoßstange komplett unter den Kipperaufbau (4) befindet.

## Revendications

1. Camion destiné à transporter des chargements en vrac comprenant un châssis (2), une benne basculante (4, 16) supportée par le châssis et, au niveau de l'extrémité de la benne basculante, un arbre de basculement (5) destiné à connecter la benne basculante au châssis, dans lequel la benne basculante s'étend avec un surplomb (6) à l'arrière de l'arbre de basculement et un butoir (8) à l'arrière du châssis sous la benne basculante, dans lequel le butoir (8) comprend un châssis de butoir (14, 15) et une charnière (12) connectant le châssis de butoir et la benne basculante, **caractérisé en ce que** l'arbre de basculement (5) et la charnière (12) présentent le même axe de rotation, et **en ce que** le butoir (8) présente un moyen de réglage pour augmenter et réduire la distance entre le butoir et la charnière.

2. Camion selon la revendication 1, dans lequel le moyen de réglage comprend une glissière.

3. Camion selon l'une des revendications précédentes, comprenant un premier actionneur (9) couplé à la benne basculante (4, 16) et au châssis de butoir (14) pour déplacer le châssis de butoir dans une position supérieure et dans une position inférieure, et un second actionneur (11) couplé au butoir (8) et au châssis de butoir pour régler la distance entre le butoir et la charnière (12).

4. Procédé destiné à transporter un chargement en vrac en utilisant un véhicule avec une benne basculante (4) et à décharger le chargement en vrac hors de la benne basculante en faisant tourner la benne basculante autour d'un arbre de basculement (5), **caractérisé en ce que**, au cours du transport, des premier et second actionneurs (9, 11) positionnent un butoir (8) qui est couplé à la benne basculante (4) par une charnière (12) qui présente le même axe de rotation que l'arbre de basculement, sous une extrémité arrière de la benne basculante et plus ou moins entre 400 mm et 600 mm au-dessus de la route, et dans lequel, avant un déchargement en basculant la benne basculante, le premier actionneur (9) fait tourner le butoir (8) vers le haut contre le dessous de la benne basculante de sorte qu'il puisse basculer avec la benne basculante, et le second actionneur (11) déplace le butoir (8) vers l'avant de sorte que le butoir se situe entièrement sous la benne basculante (4).
